# EUROPEAN PATENT SPECIFICATION

(11) **EP 3 043 432 B1**
(45) Date of publication and mention of the grant of the patent: **09.08.2017**
(21) Application number: 16150516.9
(22) Date of filing: 08.01.2016
(51) Int. Cl.: H02G 3/08

(54) **THIN-WALLED HOUSING FOR AN ELECTRIC OR ELECTRONIC DEVICE**
DÜNNWANDIGER BEHÄLTER FÜR ELEKTRISCHES ODER ELEKTRONISCHES GERÄT
BOÎTIER À PAROI MINCE POUR DISPOSITIF ELECTRIQUE OU ELECTRONIQUE

(30) Priority: 09.01.2015 BE 201505007
(43) Date of publication of application: 13.07.2016
(73) Proprietor: Niko NV, 9100 Sint-Niklaas (BE); Ivanka Factory Zartköruen Muködo Reszvenytarsasag, 1165 Budapest (HU)
(72) Inventor: Van Reeth, Filip, 2018 Antwerpen (BE); Van Ranst, Jurgen, 9040 Gent (BE); Verhaeghe, Niels, 9070 Destelbergen (BE); De Pauw, Franky, 9160 Lokeren (BE); Ivanka, Andras Rudolf, 1087 Budapest (HU); Ivanka, Katalin, 1087 Budapest (HU)
(74) Representative: D'Halleweyn, Nele Veerle Trees Gertrudis

(56) References cited:
- EP-A1- 2 133 972
- DE-U1-202006 019 593

## Description

### Technical field of the invention

The present invention relates to a thin-walled housing for an electric or electronic device. More particularly, the present invention relates to a thin-walled housing that is made of epoxy concrete and has a thickness of between 1,5 mm and 15 mm.

### Background of the invention

Modern interiors more and more require modern finishing of electric or electronic devices, such as, for example, cover plates for electric or electronic installation material such as switches, sockets, USB connections and the like. One of the popular materials therefor is concrete. However, when thin housings are required, such as for example cover plates or housings for remote controls or the like, there is a high likelihood that these housings crack, burst or even break when forces are applied to it, for example, when installing or using it. This is because cement concrete can only withstand a very limited amount of tension stress. Such tension stress is induced by pulling, bending or torsion, needed for mounting and dismounting the parts. Furthermore, only simple shapes are possible due to manufacturing constraints.

Solutions have already been provided. For example, in EP 2 133 972 a cover plate for an electric device is described. The cover plate is made of cement concrete and comprises a thin metal plate completely covered by the concrete in order to make it stronger. This makes, however, the manufacturing process of the cover plate a lot more complicated, as two different materials are used and the metal plate has to be embedded into the concrete material.

DE 20 2006 019 593 describes a fireproof wall passage to take pipes/cables through a building/ship wall opening. The fireproof wall passage comprises a first frame which can be fastened to or in the wall opening, at least one module body which can be pressed in the first frame, and at least one pressing device for pressing the at least one module body in the first frame. According to DE 20 2006 019 593, at least one module body or the first frame consists at least partially of an intumescent material, in particular expanded graphite, distributed in a matrix material. The matrix material is hard-elastic and does not comprise hollow zones and is for example made from plastics or polymer concrete. The passage is completed by a second and identical frame.

### Summary of the invention

It is an object of embodiments of the present invention to provide a thin-walled housing for an electric or electronic device that has a concrete look and feel but that is also strong and flexible and does not break or burst when applying forces to it.

In a first aspect, the present invention provides a thin-walled housing for an electric or electronic device. The thin-walled housing is made of polymer concrete and has a thickness of between 1,5 mm and 15 mm.

According to embodiments of the invention, the polymer concrete may comprise between 40% and 85% polymer resin + hardener, between 10% and 50% mineral filler such as for example sand (e.g. quartz sand), aluminium hydroxide, basalt, granite, clay, brick, limestone and the like, between 5% and 50% lightweight (LW) filler such as, for example, silicate microspheres, and between 0,8% and 3% SiO₂.

The LW filler, such as silicate microspheres, is added for the purpose of keeping the polymer concrete mixture homogeneous by lowering the viscosity of the mixture, which allows a better blending of the components.

Addition of SiO₂ makes sure that the mineral filler does not separate from the other components of the polymer concrete by avoiding the mineral filler from settling and sinking to the bottom, either in the mixture while casting the thin-walled housing or in the casted thin-walled housing or in the thin-walled housing while curing. Further, the SiO₂ has the property of absorbing moisture and helps the mixture to reach the desired consistency.

The polymer resin may preferably be one of epoxy, polyester, polyurea or polyurethane. The type of hardener depends on the type of polymer resin used.

According to embodiments of the invention, the polymer concrete may comprise between 65% and 75% polymer resin + hardener.

According to embodiments of the invention, the polymer concrete may comprise between 15% and 25% mineral filler such as for example sand (e.g. quartz sand), aluminium hydroxide, basalt, granite, clay, brick, limestone and the like.

According to embodiments of the invention, the polymer concrete may comprise between 7% and 13% LW filler.

According to embodiments of the invention, the polymer concrete may comprise between 1 % and 2% SiO₂.

The thin-walled housing may be a cover plate for electrical or electronic installation material such as, for example, a socket, a switch, a network termination point, a USB connection or the like. The cover plate may have a plane and an edge around that plane. The plane may have a thickness of between 1,5 mm and 8 mm and the edge may have a thickness of between 2 mm and 15 mm. According to other embodiments of the invention, the thin-walled housing may be a housing for a remote control or a housing for a device for measuring the consumption of an electrical appliance, such as for example a smart plug.

In a second aspect, the invention provides a method for manufacturing a thin-walled housing for an electric or electronic device. The method comprises providing a mould, pouring a polymer concrete into the mould, the polymer concrete comprising between 40% and 85% polymer resin + hardener, between 10% and 50% sand, between 5% and 50% lightweight (LW) filler, and between 0,8 and 3% SiO₂. In a next step the polymer concrete mixture is cured and the thin-walled housing is removed from the mould.

According to embodiments of the invention, providing a mould may comprise providing a mould made from polyoxymethylene (POM), polypropylene, silicone or polyamide.

The method may furthermore comprise machining, for example grinding or milling, the thin-walled housing for obtaining a flat surface and to achieve the required thickness.

Removing the thin-walled housing from the mould may, according to embodiments of the invention, be done by ejecting the thin-walled housing from the mould with an ejector plate comprising ejector pins. For this purpose the mould may comprise cylinders which can be moved by the ejector pins of the ejector plate of an external ejection mechanism for ejecting the thin-walled housing from the mould. These cylinders can be made of plastic or any other suitable material that can be machined such as, for example, stainless steel. An advantage hereof is that cheap moulds can be made, which do not require an ejection mechanism, because of the presence of these cylinders only an external ejection mechanism is required.

The mould may furthermore comprise notches for the formation of high precision alignment features and/or positioning features and/or fixation features on the thin-walled housing.

### Brief description of the drawings

It has to be noted that same reference signs in the different figures refer to same, similar or analogous elements.
Figure 1A to 1D illustrates a front view (Figure 1A), a back view (Figure 1B), a top view (Figure 1C) and a cross-section along line A-A as indicated in Figure 1C (Figure 1D) of a cover plate for electric or electronic installation material according to embodiments of the invention.
Figure 2 illustrates a 3D view (Figure 2A) of a remote control comprising a housing according to embodiments of the invention, and an exploded front view (Figure 2B) and an exploded back view (Figure 2C) of the housing of such remote control.
Figure 3 illustrates a 3D view (Figure 3A) of a device for measuring the consumption of an electrical appliance comprising a housing according to embodiments of the invention, and an exploded front view (Figure 3B) and an exploded back view (Figure 3C) of the housing of such device.
Figure 4 illustrates a 3D view (Figure 4A), a top view (Figure 4B) and a cross-section along line A-A as indicated in Figure 4B (Figure 4C) of a mould that can be used in a method according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes only, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

Not all embodiments of the invention comprise all features of the invention. In the following description and claims, any of the claimed embodiments can be used in any combination.

In a first aspect, the present invention provides thin-walled housing for an electric or electronic device. The thin-walled housing is made of polymer concrete and has a thickness of between 1,5 mm and 15 mm.

A thin-walled housing according to embodiments of the invention is strong and flexible, despite the fact that it is very thin, and will therefore not burst or break when forces are applied to it during, for example, installation or use.

The present invention will hereinafter be described by means of different embodiments. It has to be understood that these embodiments are only for the ease of understanding the invention and are not intended to limit the invention in any way.

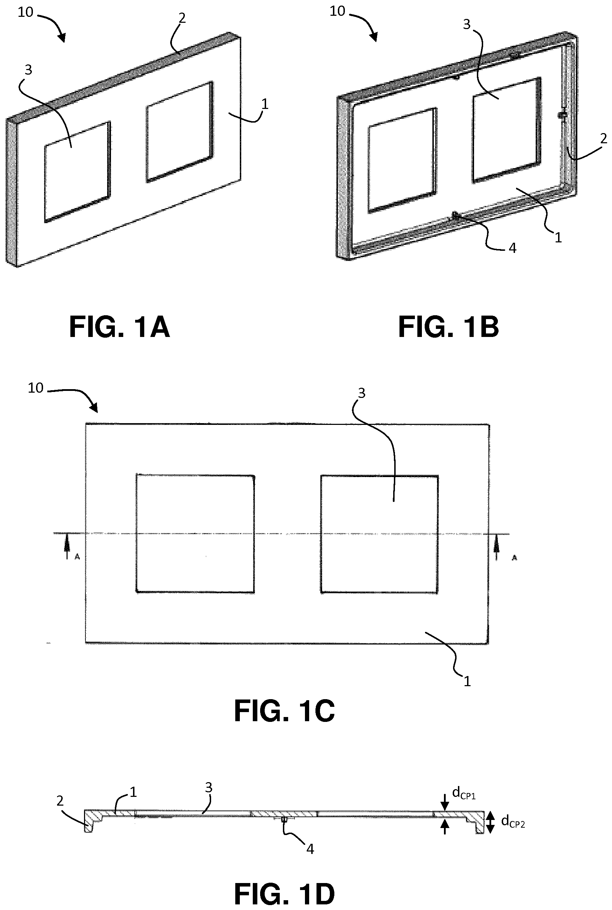

Figure 1 illustrates a first embodiment of a thin-walled housing 10 according to the invention. In the embodiment illustrated, the thin-walled housing 10 is a cover plate for electric or electronic installation material such as, for example, a switch, a socket, a network termination point, a USB connection or the like. Figure 1A illustrates a front side, Figure 1B illustrates a back side and Figure 1C a top view of the cover plate 10. As can be seen from the figures, the cover plate 10 is a dual cover plate, i.e. to cover for example two neighbouring switches, sockets, network termination points, USB connections or the like. However, this is not intended to limit the invention in any way. The cover plate 10 could also be a single, triple or any other cover plate 10 known by a person skilled in the art.

The cover plate 10 is made of polymer concrete. According to embodiments of the invention, the polymer concrete may comprise between 40% and 85% polymer resin + hardener, between 10% and 50% mineral filler, between 5% and 50% lightweight (LW) filler, and between 0,8% and 3% SiO₂.

The polymer resin may preferably be one of epoxy, polyester, polyurea or polyurethane. The type of hardener depends on the type of polymer resin used. In case the polymer resin is epoxy, for example an aliphatic polyamine can be used as a hardener. When the polymer resin is polyurea or polyurethane, for example iso-cyanates can be used as a hardener. When the polymer resin is polyester, a peroxide such as e.g. methylethylketon peroxide may be used as a hardener.

The mineral filler can, for example, be sand (e.g. quartz sand), aluminium hydroxide, basalt, granite, clay, brick, limestone or the like.

The LW filler may, for example, comprise silicate microspheres and is added for the purpose of keeping the polymer concrete mixture homogeneous by lowering the viscosity of the mixture, which allows better blending of the mixture.

The SiO₂ is added to make sure that the mineral filler does not separate from the other components of the polymer concrete, by avoiding the mineral filler from settling and sinking to the bottom, either in the mixture while casting the thin-walled housing or in the casted thin-walled housing or in the thin-walled housing while curing. The SiO₂ increases the consistency of the polymer concrete mixture. Further, the addition of SiO₂, because of the property of absorbing moisture, can influence other effects such as curing time.

Preferably, the polymer concrete may comprise between 65% and 75% polymer resin + hardener, between 15% and 25% mineral filler, between 7% and 13% LW filler and between 1% and 2% SiO₂.

An example of a suitable polymer concrete mixture to be used in accordance with embodiments of the invention but not intended to be limiting in any way, may, for example, be a mixture comprising 68,8% epoxy + aminomethyl, trimethyl-cyclohexilamine, benzyl alcohol, 19,7% sand, 9,8% silicate microspheres and 1,7% SiO₂. Preferably, the 68,8% epoxy + aminomethyl, trimethyl-cyclohexilamine, benzyl alcohol may consist of 49,1% epoxy + 19,7% aminomethyl, trimethyl-cyclohexilamine, benzyl alcohol.

The cover plate 10 has a plane 1 and an edge 2 surrounding that plane 1. The plane 1 has a first thickness d_{cp1} (see Figure 1D which illustrates a cross-section of the cover plate 10 along the line A-A as indicated in Figure 1C) which may be between 1,5 mm and 8 mm, preferably between 1,5 mm and 3 mm and most preferably between 2,1 mm and 2,5 mm. The edge 2 has a second thickness d_{cp2}, which is higher than the first thickness d_{cp1}, and which may be between 2 mm and 15 mm, preferably between 6 mm and 11 mm and may, for example, be 8,65 mm (see also Figure 1D).

Such thin sizes can only be obtained because of the chosen material, i.e. polymer concrete. This gives the cover plate 10 a cement concrete look and feel, but does not have the disadvantages of using real cement concrete. By using polymer concrete according to embodiments of the invention, the resulting thin-walled housing, in the example given cover plate 10, will not break or burst during mounting or dismounting or during any other use.

In the example given, the cover plate 10 further comprises two square openings 3 for the location of the functional modules of the electric or electronic device. The functional module depends on the type of electric or electronic device. For example, for a switch, the functional module may be a button, while for a USB connection this is a USB port. The presence of such square openings 3 can, when using cement concrete, induce a risk of breaking either while moulding because of shrinkage stress in the corners, or in use of the cover plate because of the notch effect, which induces high stresses near sharp corners. By using polymer concrete this risk is prevented. This is because polymer concrete according to embodiments of the invention will shrink less than cement concrete while curing, and therefore the shrinkage stress will be lower in polymer concrete according to embodiments of the invention than in cement concrete. Furthermore, the shrinkage stress occurring in the polymer concrete according to embodiments of the invention will be considerably lower than the tensile strength of the polymer concrete, so that this will not cause cracking, bursting or braking of the thin-walled device according to embodiments of the invention. Hence, according the embodiments of the invention, the presence of square openings 3 in the cover plate 10 does not bring any risk of braking or bursting to the cover plate 10, not during the manufacturing process nor during use of the cover plate 10.

The cover plate 10 may furthermore comprise alignment features 4 for properly aligning the cover plate 10 to a base plate (not shown) before providing it to the electric or electronic device. The base plate may, for example, be made of plastic and may assure safety of the complete cover when provided onto the electric or electronic device. It secures double insulation for the user by preventing charged parts of the electric or electronic device, e.g. by loosened wires inside the electric or electronic device, to be touched by the user.

A cover plate 10 according to embodiments of the invention has some advantages with respect to cover plates made of cement concrete. The cover plate is strong but still flexible, which makes sure that it does not break or burst when mounting or dismounting.

Further, the cover plate is flexible enough to be well aligned to the wall, without braking or bursting, even when the wall is not perfectly flat, as it can withstand the torsion and bending stress applied to it when aligning it to the wall.

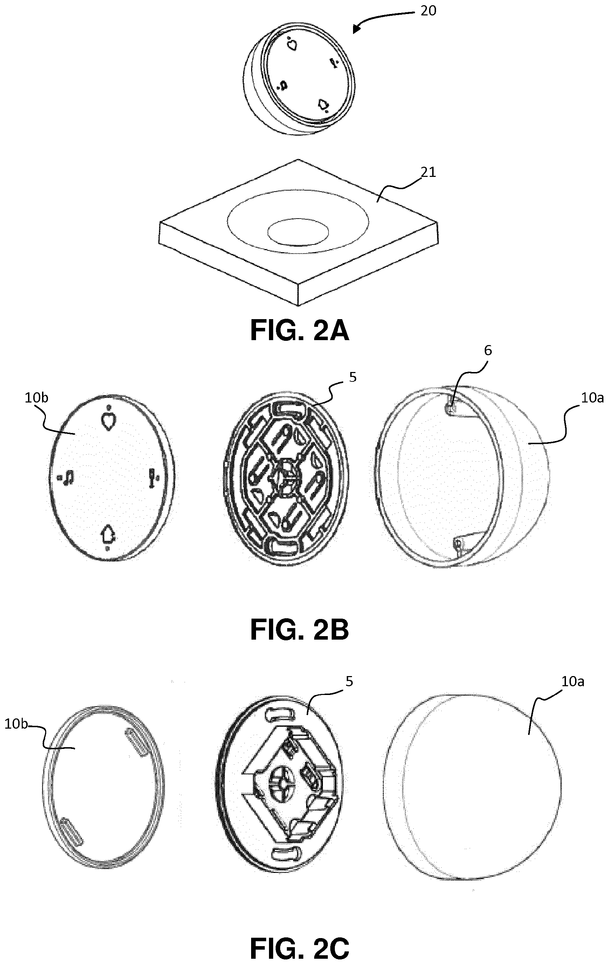

Furthermore, the use of polymer concrete according to embodiments of the invention allows the devices to be formed in complicated shapes, because there are less manufacturing constraints. This will be illustrated hereinafter. Figures 2A to 2C illustrate another embodiment of the thin-walled housing 10 for an electric or electronic device 20 according to the invention. In the embodiment illustrated in Figures 2A to 2C the thin-walled housing is a housing 10 for a remote control 20. The remote control 20 also comprises a holder 21 in which the remote control 20 can be stored when not in use and/or in which it can be loaded. Figure 2A shows a 3D view, Figure 2B an exploded front view and Figure 2C an exploded back view of the remote control 20.

The housing 10a, 10b is, according to the invention, made of polymer concrete, which may have a similar constitution as described for the embodiment illustrated in Figures 1A to 1D, and thus will have the same advantages as the cover plate 10 illustrated in Figures 1A to 1D. The holder 21 may also be made of polymer concrete or may be made of any other suitable material.

The housing 10a, 10b of the remote control 20 comprises a hollow part 10a and a cover part 10b. Both parts 10a, 10b are made of polymer concrete. The device 20 furthermore comprises an intermediate part 5 for, on the one hand, fixing the cover part 10b and, on the other hand, transmitting the movement of the cover part 10b to the switches in the device 20. The intermediate part 5 may, for example, be made of a thermoplast material.

As can be seen from Figure 2B the hollow part 10a may comprise fixation features 6 in the shape of screw holes for fixing the cover part 10b to it. The cover part 10b may furthermore comprise positioning features 7 for well-positioning the cover part 10b to the intermediate part 5.

The hollow part 10a and the cover part 10b may have a thickness of between 1,5 mm and 5 mm, preferably between 2 mm and 3 mm.

Because of the use of polymer concrete to form the housing 10 of this remote control, it is possible to make this housing 10 rather thin without having the risk that it breaks when twisting it or when fixing the two parts 10a, 10b of the housing together. Also, the use of polymer concrete according to embodiments of the invention allows to make such rounded shapes with very low thicknesses, which would be more difficult when using cement concrete.

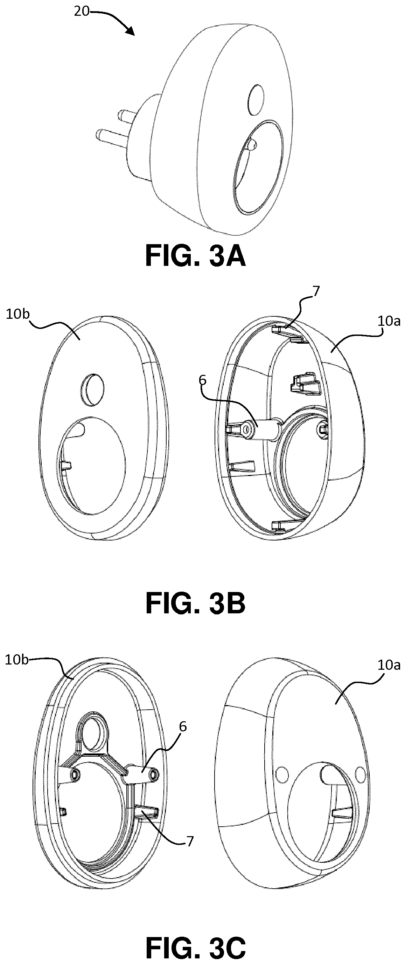

Another example of a thin-walled housing 10 for an electric or electronic device 20 according to a further embodiment of the invention is illustrated in Figures 3A to 3C. According to this embodiment, the electric or electronic device 20 may be a smart plug for measuring the consumption of an electrical appliance, such as for example a washing machine or the like. Figure 3A shows a 3D view of the smart plug 20 and Figure 3B and Figure 3C show an exploded view of respectively the front side and the back side of the housing 10a,b of such smart plug 20.

Similar as for the remote control 20 illustrated in Figures 2A to 2C, the housing 10 of the smart plug 20 also comprises a hollow part 10a and a cover part 10b.

The housing 10a, 10b is, according to the invention, made of polymer concrete, which has a similar constitution as described for the embodiment illustrated in Figures 1A to 1D, and thus will have the same advantages as the cover plate 10 illustrated in Figures 1A to 1D.

The hollow part 10a and the cover part 10b may have a thickness of between 1,5 mm and 5 mm, preferably between 2 mm and 3 mm.

The housing 10a, 10b of the smart plug 20 may furthermore comprise fixation features 6 and positioning features 7.

In a second aspect, the present invention provides a method for manufacturing a thin-walled housing 10 for an electric or electronic device 20. The method comprises providing a mould, pouring a polymer concrete mixture into the mould, the polymer concrete mixture comprising between 40% and 85% polymer resin + hardener, between 10% and 50% sand, between 5% and 50% lightweight (LW) filler, and between 0,8 and 3% SiO₂, curing the polymer concrete mixture, and removing the thin-walled housing from the mould.

The polymer resin may preferably be one of epoxy, polyester, polyurea or polyurethane. The type of hardener depends on the type of polymer resin used. For example, in case the polymer resin is epoxy, for example an aliphatic polyamine can be used as a hardener. When the polymer resin is polyurea or polyurethane, for example iso-cyanates can be used as a hardener. When the polymer resin is polyester, a peroxide such as e.g. methylethylketon peroxide may be used as a hardener. The mineral filler can, for example, be sand (e.g. quartz sand), aluminium hydroxide, basalt, granite, clay, brick, limestone or the like.

The LW filler may, for example, comprise silicate microspheres and is added for the purpose of keeping the polymer concrete mixture a homogeneous mixture by lowering the viscosity of the mixture, which allows a better blending of the mixture.

The SiO₂ is added to make sure that the mineral filler does not separate from the other components of the polymer concrete mixture before or during curing by avoiding the mineral filler from settling and sinking to the bottom.

The SiO₂ increases the consistency of the polymer concrete mixture. Further, the addition of SiO₂, because of the property of absorbing moisture, can influence other effects such as curing time. Preferably, the polymer concrete mixture may comprise between 65% and 75% polymer resin + hardener, between 15% and 25% mineral filler, between 7% and 13% LW filler and between 1% and 2% SiO₂.

An example of a suitable polymer concrete mixture to be used in accordance with embodiments of the invention but not intended to be limiting in any way, may, for example, be a mixture comprising 68,8% epoxy + aminomethyl, trimethyl-cyclohexilamine, benzyl alcohol, 19,7% sand, 9,8% silicate microspheres and 1,7% SiO₂.

According to embodiments of the invention, curing may be done during at least 16 hours at a temperature of between 20°C and 80°C, preferably between 30°C and 35°C, and at a relative humidity of lower than 70%.

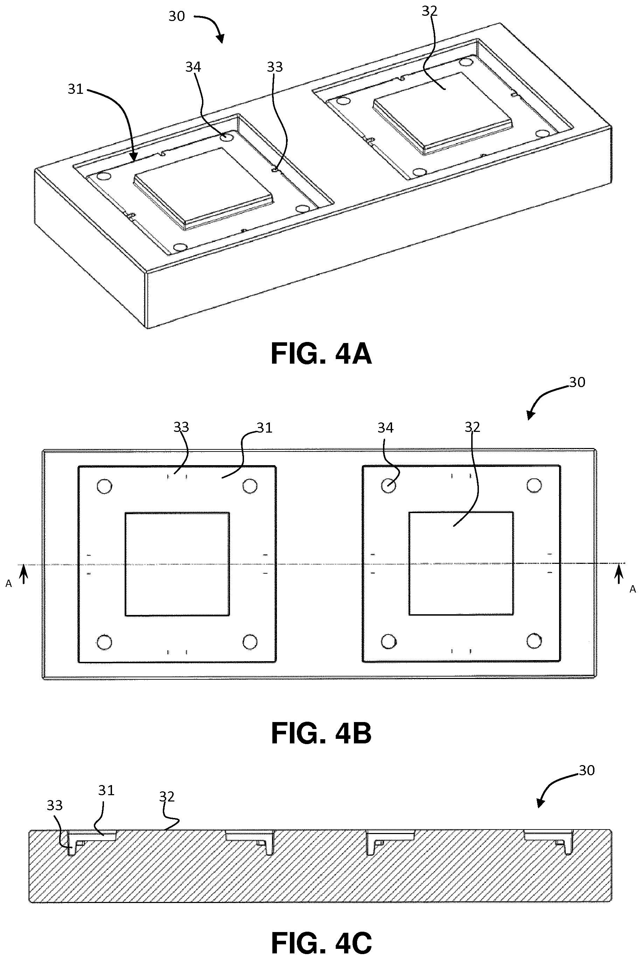

The mould used in the process may preferably be made from polyoxymethylene (POM), polypropylene, silicone or polyamide. Figures 4A to 4C illustrate a 3D view (Figure 4A), a top view (Figure 4B) and a cross-section along the line A-A as indicated in Figure 4B (Figure 4C) of a mould 30 that can be used for the method according to embodiments of the invention for the manufacturing of a dual cover plate as illustrated in Figures 1A to 1D. It has to be noted that this mould is illustrated for the ease of explanation only and that it is not intended to limit the invention in any way.

The mould 30 comprises at least one recess in the shape of the thin-walled housing 10 to be manufactured, in the embodiment illustrated in Figures 4A to 4C two square recesses 31 with smaller elevated square parts 32 to make the openings 3 for the functional modules. The mould 30 furthermore comprises notches 33 for the formation of high precision alignment features 4 and/or fixation features 6 and/or positioning features 7 on the thin-walled housing 10, in the example given these notches 33 are for providing the cover plate 10 with alignment features for proper alignment on a base plate when installing it onto electric or electronic installation material, such as a socket, a switch, a network termination point, a USB connection or the like.

After curing, the thin-walled housing 10 is removed from the mould 30. This may be done by ejecting the thin-walled housing 10 from the mould 30 with an ejector plate comprising ejector pins (not shown). This ejector plate with ejector pin is part of a separate ejection mechanism that is not part of the mould 30 itself. The mould 30 may therefore furthermore comprise cylinders 34 which can be moved by the ejector pins of the ejector plate of the external ejection mechanism for ejecting the thin-walled housing 10 from the mould 30. The cylinders 34 can be made of plastic or any other suitable material that can be machined such as, for example, stainless steel.

An advantage hereof is that, because the ejector mechanism is not part of the mould 30 but is an external ejector mechanism, the moulds 30 can be made at low cost because only movable pins, which may, for example, be made of plastic, have to be provided to the mould 30.

After curing and removing the thin-walled housing 10 from the mould 30, the thin-walled housing 10 may be machined, e.g. by grinding or milling, for obtaining a flat surface and to achieve the required thickness of between 1,5 mm and 15 mm, depending on the type of thin-walled housing 10 that is manufactured.

## Claims

1. A thin-walled housing (10) for an electric or electronic device (20), the thin-walled housing (10) being made of polymer concrete and having a thickness of between 1,5 mm and 15 mm, **characterised in that** the polymer concrete comprises:
- between 40% and 85% polymer resin + hardener,
- between 10% and 50% mineral filler,
- between 5% and 50% lightweight (LW) filler, and
- between 0,8% and 3% SiO₂.

2. Thin-walled housing (10) according to claim 1, wherein the polymer resin is one of epoxy, polyester, polyurea or polyurethane.

3. Thin-walled housing (10) according to any of the previous claims, wherein the polymer concrete comprises between 65% and 75% polymer resin + hardener.

4. Thin-walled housing (10) according to any of the previous claims, wherein the polymer concrete comprises between 15% and 25% mineral filler.

5. Thin-walled housing (10) according to any of the previous claims, wherein the polymer concrete comprises between 7% and 13% lightweight (LW) filler.

6. Thin-walled housing (10) according to any of the previous claims, wherein the polymer concrete comprises between 1% and 2% SiO₂.

7. Thin-walled housing (10) according to any of the previous claims, wherein the thin-walled housing (10) is a cover plate for electrical or electronic installation material.

8. Thin-walled housing (10) according to claim 7, the cover plate having a plane (1) and an edge (2) around that plane (1), wherein the plane (1) has a thickness d_{CP1} of between 1,5 mm and 8 mm and wherein the edge (2) has a thickness d_{CP2} of between 2 mm and 15 mm.

9. Thin-walled housing (10) according to any of claims 1 to 6, wherein the thin-walled housing (10) is a housing (10a, 10b) for a remote control (20) or a housing (10a, 10b) for a device (20) for measuring the consumption of an electrical appliance.

10. A method for manufacturing a thin-walled housing (10) for an electric or electronic device (20), the method comprising:
- providing a mould (30),
- pouring a polymer concrete mixture into the mould (30), the polymer concrete mixture comprising between 40% and 85% polymer resin + hardener, between 10% and 50% mineral filler, between 5% and 50% lightweight (LW) filler, and between 0,8 and 3% SiO₂,
- curing the polymer concrete mixture, and
- removing the thin-walled housing (10) from the mould (30).

11. Method according to claim 10, wherein providing a mould (30) comprises providing a mould (30) made from polyoxymethylene (POM), polypropylene, silicone or polyamide.

12. Method according to claim 10 or 11, furthermore comprising, after removing the thin-walled housing (10) from the mould (30), machining the thin-walled housing (10).

13. Method according to any of claims 10 to 12, wherein removing the thin-walled housing (10) from the mould (30) is done by ejecting the thin-walled housing (10) from the mould (30) with an ejector plate comprising ejector pins.

14. Method according to any of claims 10 to 13, wherein the mould (30) comprises notches (33) for the formation of high precision alignment features (4) and/or fixation features (6) and/or positioning features (7) on the thin-walled housing (10).

## Patentansprüche

1. Ein dünnwandiges Gehäuse (10) für eine elektrische oder elektronische Vorrichtung (20), wobei das dünnwandige Gehäuse (10) aus Polymerbeton besteht und eine Dicke zwischen 1,5 mm und 15 mm aufweist, **dadurch gekennzeichnet, dass** der Polymerbeton umfasst:
- zwischen 40 % und 85 % Polymerharz + Härter,
- zwischen 10 % und 50 % Mineralfüllstoff,
- zwischen 5 % und 50 % Leichtfüllstoff (LW) und
- zwischen 0,8 % und 3 % SiO₂.

2. Dünnwandiges Gehäuse (10) nach Anspruch 1, wobei das Polymerharz eines von Epoxid, Polyester, Polyharnstoff oder Polyurethan ist.

3. Dünnwandiges Gehäuse (10) nach einem der vorhergehenden Ansprüche, wobei der Polymerbeton zwischen 65 % und 75 % Polymerharz + Härter aufweist.

4. Dünnwandiges Gehäuse (10) nach einem der vorhergehenden Ansprüche, wobei der Polymerbeton zwischen 15 % und 25 % Mineralfüllstoff aufweist.

5. Dünnwandiges Gehäuse (10) nach einem der vorhergehenden Ansprüche, wobei der Polymerbeton zwischen 7 % und 13 % Leichtfüllstoff (LW) aufweist.

6. Dünnwandiges Gehäuse (10) nach einem der vorhergehenden Ansprüche, wobei der Polymerbeton zwischen 1 % und 2 % SiO₂ aufweist.

7. Dünnwandiges Gehäuse (10) nach einem der vorhergehenden Ansprüche, wobei das dünnwandige Gehäuse (10) eine Deckplatte für elektrisches oder elektronisches Installationsmaterial ist.

8. Dünnwandiges Gehäuse (10) nach Anspruch 7, wobei die Deckplatte eine ebene Fläche (1) und eine Kante (2) um die ebene Fläche (1) aufweist, wobei die ebene Fläche (1) eine Dicke d_{CP1} zwischen 1,5 mm und 8 mm aufweist, und wobei die Kante (2) eine Dicke d_{CP2} zwischen 2 mm und 15 mm aufweist.

9. Dünnwandiges Gehäuse (10) nach einem der Ansprüche 1 bis 6, wobei das dünnwandige Gehäuse (10) ein Gehäuse (10a, 10b) für eine Fernsteuerung (20) oder ein Gehäuse (10a, 10b) für eine Vorrichtung (20) zum Messen des Verbrauchs eines Elektrogeräts ist.

10. Verfahren zum Herstellen eines dünnwandigen Gehäuses (10) für eine elektrische oder elektronische Vorrichtung, wobei das Verfahren Folgendes umfasst:
- Vorsehen einer Gießform (30),
- Gießen einer Polymerbetonmischung in die Gießform (30), wobei die Polymerbetonmischung zwischen 40 % und 85 % Polymerharz + Härter, zwischen 10 % und 50 % Mineralfüllstoff, zwischen 5 % und 50 % Leichtfüllstoff (LW) und zwischen 0,8 und 3 % SiO₂ aufweist,
- Härten der Polymerbetonmischung, und
- Entnehmen des dünnwandigen Gehäuses (10) aus der Gießform (30).

11. Verfahren nach Anspruch 10, wobei das Vorsehen einer Gießform (30) das Vorsehen einer Gießform (30) aus Polyoxymethylen (POM), Polypropylen, Silicon oder Polyamid umfasst.

12. Verfahren nach Anspruch 10 oder 11, welches ferner nach dem Entnehmen des dünnwandigen Gehäuses (10) aus der Gießform (30) das Bearbeiten des dünnwandigen Gehäuses (10) umfasst.

13. Verfahren nach einem der Ansprüche 10 bis 12, wobei das Entnehmen des dünnwandigen Gehäuses (10) aus der Gießform (30) durch Auswerfen des dünnwandigen Gehäuses (10) aus der Gießform (30) mit einer Auswerferplatte mit Auswerferstiften erfolgt.

14. Verfahren nach einem der Ansprüche 10 bis 13, wobei die Gießform (30) Kerben (33) für die Bildung von hochpräzisen Ausrichtmerkmalen (4) und/oder Befestigungsmerkmalen (6) und/oder Positionierungsmerkmalen (7) auf dem dünnwandigen Gehäuse (10) aufweist.

## Revendications

1. Boîtier à paroi mince (10) pour un dispositif électrique ou électronique (20), le boîtier à paroi mince (10) étant constitué de béton polymère et ayant une épaisseur entre 1,5 mm et 15 mm, **caractérisé en ce que** le béton polymère comprend :
- entre 40 % et 85 % de résine polymère + durcisseur,
- entre 10 % et 50 % de remplisseur minérale,
- entre 5 % et 50 % de remplisseur légère (LW), et
- entre 0,8 % et 3 % de SiO₂.

2. Boîtier à paroi mince (10) selon la revendication 1, dans lequel la résine polymère est l'un des éléments parmi l'époxy, le polyester, la polyurée ou le polyuréthane.

3. Boîtier à paroi mince (10) selon l'une quelconque des revendications précédentes, dans lequel le béton polymère comprend entre 65 % et 75 % de résine polymère + durcisseur.

4. Boîtier à paroi mince (10) selon l'une quelconque des revendications précédentes, dans lequel le béton polymère comprend entre 15 % et 25 % de remplisseur minérale.

5. Boîtier à paroi mince (10) selon l'une quelconque des revendications précédentes, dans lequel le béton polymère comprend entre 7 % et 13 % de remplisseur légère (LW).

6. Boîtier à paroi mince (10) selon l'une quelconque des revendications précédentes, dans lequel le béton polymère comprend entre 1 % et 2 % de SiO₂.

7. Boîtier à paroi mince (10) selon l'une quelconque des revendications précédentes, dans lequel le boîtier à paroi mince (10) est une plaque de recouvrement pour matériel d'installation électrique ou électronique.

8. Boîtier à paroi mince (10) selon la revendication 7, la plaque de recouvrement ayant un plan (1) et un bord (2) autour de ce plan (1), dans lequel le plan (1) a une épaisseur d_{CP1} entre 1,5 mm et 8 mm et dans lequel le bord (2) a une épaisseur d_{CP2} entre 2 mm et 15 mm.

9. Boîtier à paroi mince (10) selon l'une quelconque des revendications 1 à 6, dans lequel le boîtier à paroi mince (10) est un boîtier (10a, 10b) pour une télécommande (20) ou un boîtier (10a, 10b) pour un dispositif (20) de mesure de la consommation d'un appareil électrique.

10. Procédé de fabrication d'un boîtier à paroi mince (10) destiné à un dispositif électrique ou électronique (20), le procédé comprenant :
- pourvoir un moule (30),
- verser un mélange de béton polymère dans le moule (30), le mélange de béton polymère comprenant entre 40 % et 85 % de résine polymère + durcisseur, entre 10 % et 50 % de remplisseur minérale, entre 5 % et 50 % de remplisseur légère (LW) et entre 0,8 et 3 % de SiO₂,
- durcir le mélange de béton polymère, et
- retirer le boîtier à paroi mince (10) du moule (30).

11. Procédé selon la revendication 10, dans lequel pourvoir un moule (30) comprend pourvoir un moule (30) constitué de polyoxyméthylène (POM), de polypropylène, de silicone ou de polyamide.

12. Procédé selon la revendication 10 ou 11, comprenant en outre, après retirer le boîtier à paroi mince (10) du moule (30), l'usinage du boîtier à paroi mince (10).

13. Procédé selon l'une quelconque des revendications 10 à 12, dans lequel retirer le boîtier à paroi mince (10) du moule (30) est fait par éjection du boîtier à paroi mince (10) du moule (30) avec une plaque d'éjecteur comprenant des broches d'éjection.

14. Procédé selon l'une quelconque des revendications 10 à 13, dans lequel le moule (30) comprend des encoches (33) pour la formation d'éléments d'alignement de grande précision (4) et/ou d'éléments de fixation (6) et/ou d'éléments de positionnement (7) sur le boîtier à paroi mince (10).
